# EUROPÄISCHE PATENTANMELDUNG

(11) **EP 4 120 520 A1**
(43) Veröffentlichungstag der Anmeldung: **18.01.2023**
(21) Anmeldenummer: 22000150.7
(22) Anmeldetag: 03.06.2022
(51) Int. Cl.: H02K 7/116, F16H 1/32, H02K 1/2786

(54) **KONZENTRISCHER GETRIEBE- MOTOR**

(30) Priorität: 13.07.2021 DE 102021003573
(71) Anmelder: Brehm, Bernhard, 75265 Calw-Stammheim (DE); Just, Manfred, 76709 Kronau (DE); Fetzner, Roland, 76646 Bruchsal (DE)
(72) Erfinder: Brehm, Bernhard, 75265 Calw- Stammheim (DE)
(74) Vertreter: Ludewig, Rita

(57) **Zusammenfassung**

Die Erfindung betrifft einen konzentrischen Getriebe- Motor. Aufgabe war, einen konzentrischen Getriebe- Motor in einer kompakten Anordnung mit Stirnrad- Exzentergetriebe zu kombinieren, die platzsparend ist, mit wenig Einzelteilen und optimaler Positionierung einen hohen Wirkungsgrad und Energieeffizienz gewährleistet. Die Lösung sieht ein Gehäuse aus einem feststehenden einseitig offenen zylindrischen Basisteil, in dessen Innenraum ein hohler Gehäusedorn zentrisch, horizontal und einstückig angeordnet ist und aus einem separaten Verschlussteil, welches das Gehäuse flächig aber drehbar verschließt, wobei der Stator des Getriebe- Motors radial auf dem Gehäusedom angeordnet ist, der an seiner stirnseitigen Außenfläche einen exzentrisch geformten Rotor als Außenläufer und Antriebswelle aufweist, ein zweistufiges Stirnrad- Exzentergetriebe, aus Planetenrad als Antrieb, radial über dem Rotor und ein Hohlrad als Abtrieb, radial über dem Planetenrad angeordnet ist und auf der äußeren Mantelfläche des Basisteils ein Laufrad mit einem radial angeformten Flansch in das Gehäuse eingreift und die Drehbewegung des Motors auf das Laufrad überträgt.

## Beschreibung

Die Erfindung betrifft einen konzentrischen Getriebe- Motor, zum Erzeugen rotierender Bewegungen für die unterschiedlichsten Anwendungsgebiete so zum Beispiel für Aufzüge, Seilbahnen, Hochregallager Taktstraßen, Roboter, Flurtransportfahrzeuge aller Art und andere.

Es ist eine Vielzahl von Antrieben bekannt so zum Beispiel wird in der EP 3 636 962 B1 eine Motor- Getriebeeinheit offenbart, in der die häufig angewendete Form eines Getriebe- Motors, bestehend aus Innenläufer-Motor, Getriebe und Kupplung zusammengesetzt ist. Dabei wird die Reihenfolge der Anordnung der Teile von der jeweiligen Arbeitsaufgabe bestimmt. Alle Antriebskomponenten sind überwiegend nebeneinander aufgereiht und durch zusätzlich erforderliche separate Antriebs- und Abtriebswellen besteht erheblicher Raumbedarf. Durch die meistenteils angewendeten Innenläufervarianten des Motors ist der bautechnische Aufwand in Verbindung mit den Getrieben sehr groß, teuer in der Herstellung und material- und zeitaufwendig.

Die DE 44 23 902 A1 hat die Aufgabe einen konzentrischen Getriebemotor zu finden, bei dem Motor und Getriebe eine konstruktive Einheit darstellen, bei Entfall von Kupplungen und Bauteilen, die nur dem Überleiten des Drehmoments aus einer Komponente in eine andere des Gesamtantriebs dienen.

Die vorgeschlagenen Lösungen sehen hier einen Außenläufermotor mit konzentrischer Anordnung in der zentrischen Antriebswelle von Umlaufgetrieben vor. Der Konzentrische Getriebe- Motor ist dadurch gekennzeichnet, dass der Außenläufer des Motors gleichzeitig Antriebswelle ist und gleichzeitig mit der Antriebswelle des Getriebes gefügt ist und die Stator-Welle des Motors hohl ist. Aus den Zeichnungen ist jedoch erkennbar, dass die Getriebekonstruktion herkömmlich mit Sonnenrad, mehreren Planetenrädern mit Bolzen zum Planetenträgern, die die Drehbewegung auf ein innenverzahntes Hohlrad übertragen. In Bild 2 wird eine mittige hohle Motorwelle und die darauf angeordnete Motorwicklung sowie außen um diese Erregermagnete gezeigt. Auf den Erregermagneten ist ein außenverzahntes Sonnenrad als Außenläufer dargestellt die die Drehbewegung auf drei außenverzahnte Planetenräder mit Bolzen übertragen, die schließlich die Drehbewegung auf ein innenverzahntes Hohlrad übertragen.

Die Bewegung wird zu einem sehr großen Sonnenrad und zu kleinen Planetenrädern übersetzt. Das hat ungünstige Übersetzungsverhältnisse zur Folge und die Vielzahl der eingesetzten Getrieberäder führt zu einem hohen Leistungsverlust und daraus abgeleitet zu einem schlechten Wirkungsgrad. Schließlich sind die Lösungsvorschläge konstruktiv aufwendig, deshalb teuer in der Herstellung und Wartung kompliziert und aufwendig.

Zusammenfassend ist der Stand der Technik besonders bei der Getriebeherstellung in Kombination mit den Innenläufermotoren materialaufwendig, kompliziert in der Herstellung, erfordert großen Raumbedarf und ist deshalb sehr kostenaufwendig. Bei der Nutzung von Außenläufermotoren sind noch keine optimalen Getriebeanpassungen bekannt. Die Kompaktheit der Getriebe- Motoren scheitert häufig an den aufwendigen mehrteiligen Gehäusekonstruktionen, die eine schlechte Wärmeableitung aufweisen und deshalb nur kleinere Drehzahlen und keine hohen Kräfte übertragen können. Häufig sind die Getriebe nebeneinander in separaten Gehäusen außerhalb vom Motor angeordnet, was außerdem zu einem schlechten Abrollvermögen bei der Verzahnung führt. Vor allem bei geringen Platzverhältnissen im Anwendungsbereich sind die Konstruktionen und der Bau derartiger exzentrischer Getriebe und Motoren häufig nicht auf einer Welle gelagert und man ist auf Einzelanfertigungen angewiesen. Das führt wiederum zu hohem Zeit-, Material- und Kostenaufwand.

Es war deshalb Aufgabe der Erfindung, einen konzentrischen GetriebeMotor in einer Anordnung mit einem Stirnrad- Exzentergetriebe derart zu kombinieren, die eine platzsparende, kompakte Bauweise gewährleistet, mit wenig Einzelteilen auskommt und deren optimale Positionierung einen hohen Wirkungsgrad, eine hohe Energieeffizienz des Getriebe- Motors gewährleisten und die bedarfsweise mit einer Leistungselektronik zu kombinieren ist.

Die Aufgabe wird mit den Merkmalen des **Anspruchs 1** gelöst, indem das Gehäuse aus einem einseitig offenen, feststehenden zylindrischen Basisteil besteht, in dem ein, in den Innenraum des Gehäuses ragender hohler beidseitig offener Gehäusedom zentrisch und horizontal zur Drehrichtung eines konzentrischen Getriebe- Motors einstückig angeordnet ist und aus einem separaten Verschlussteil, welches das Gehäuse auf der offenen Seite flächig aber drehbar verschließt, zusammengesetzt ist, der konzentrische Getriebe- Motor mit seinem Stator radial auf der Innenwand des beidseitig offenen Gehäusedoms des Basisteils fest aufgeschrumpft ist und der innen magnetbestückte, an seiner äußeren Stirnfläche exzentrisch geformte Rotor als Außenläufer einerseits radial um den Stator, andererseits radial entlang der Außenwand des hohlen Gehäusedoms als einseitig offene, zylindrische hohle Antriebswelle verläuft und um einen, außerhalb des Basisteils endseitig herausragenden Wellenansatz der Antriebswelle, eine Verbindungsscheibe stabil und drehbar am Basisteil des Gehäuses angeordnet ist, das Stirnrad-Exzentergetriebe zweistufig mit zwei Zahnradpaaren gebildet ist, die jeweils aus einem Planetenrad mit einer evolventen Außenverzahnung als Antrieb, der radial über dem Rotor angeordnet ist und einem zum Planetenrad angeordnetes Hohlrad mit einer evolventen Innenverzahnung als Abtrieb bestehen, die radial über dem Planetenrad angeordnet sind und sich die linke Motorlagerung am Basisteil abstützt und auf der äußeren Mantelfläche des Basisteils ein Laufrad angeordnet ist, das mit einem radial nach innen gerichtet angeformten Flansch zwischen Basisteil und Verschlussteil in das Gehäuse eingreift mit dem die Drehbewegung des Motors auf das Laufrad zu übertragen ist und mit dem Verschlussteil über das Hohlrad das Basisteil mit dem darin radial angeordneten und über Lager am Basisteil und zwischen den Einbauteilen stabil gelagerten Außenläufermotorteilen und Exzenter-Getriebeteilen, drehbar mechanisch miteinander zu verbinden und das Basisteil einseitig zu verschließen ist.

Besonders hervorzuheben ist das erfindungsgemäße Gehäuse, das nur aus zwei Bauteilen, dem Basisteil und dem Verschlussteil besteht. Das Basisteil ist so gestaltet, dass durch den, horizontal in das Innere des Gehäuses gerichteten, zentrisch und einstückig angeordneten Gehäusedorn, der hohl und beidseitig offen ist, die Grundlage dafür geschaffen wurde, dass auf diesem in radialer Richtung der Stator des konzentrischen Getriebe- Motors feststehend aufgeschrumpft werden kann, im Gehäusezylinder liegt, in dem die Antriebswelle des Rotors horizontal drehbar gelagert und der übrige an seiner stirnseitigen Außenfläche exzentrisch geformte Rotorteil radial über dem Stator angeordnet ist. Es ist keine zusätzliche Antriebswelle des Motors erforderlich, die beidseitig aus dem Gehäuse herausragen muss und auf dem neben dem Motor das Getriebe montiert werden müsste. Von der offenen Seite des Basisteils kann das Planetenrad des zweistufigen Stirnrad-Exzentergetriebes eingeführt und radial auf dem Rotor des Motors aufgesetzt werden, das mit seiner evolventen Außenverzahnung stabil angeordnet und auf dem wiederum in radialer Richtung zwischen der Gehäusewand und dem Planetenrad das Hohlrad mit seiner evolventen Innenverzahnung auf einer einzigen gemeinsamen An- und Abtriebswelle eingesetzt wird.

Das Gehäuse gestattet somit eine einfache und übersichtliche Montage aller Getriebe- und Motorbestandteile. Die kompakte Anordnung von Außenläufermotor, bestehend aus zwei Teilen, Stirnrad- Exzentergetriebe, mit zwei Zahnradpaaren, welche auf einer zentralen Antriebswelle und in einer einheitlichen radialen Achse verläuft, ist ungeheuer platzsparend.

Das Hohlrad der ersten Getriebestufe ist dann am Gehäuse angeordnet und die zweite Getriebestufe wird vom Getriebeabtrieb übernommen. Wobei Stützrollen entfallen können, weil sich die linke Motorlagerung am Basisteil abstützt. Bei der zweistufigen Ausführungsvariante des Getriebes sind im Gegensatz zu einer einstufigen Variante zwei Zahnradpaare als Antriebs- und Abtriebsrad erforderlich.

Die Kompaktheit wird unterstützt von einem in der gleichen radialen Achse auf der äußeren Stirnfläche des Gehäuses aufgesetzten Laufrad, das durch einen innen angeformten Flansch, der zwischen Basisteil und Verschlussteil des Gehäuses radial in das Gehäuse hineinragt. Das Verschlussteil wird auf einfachste Weise durch eine mechanische Verbindung durch den Flansch des Laufrades mit dem Hohlrad verbunden und so die Übertragung der Drehbewegung des Motors auf das Laufrad übertragen, wobei das Verschlussteil einerseits das Basisteil des Gehäuses verschließt und andererseits sich mit dem Hohlrad und dem Laufrad mit dreht.

Das Gehäuse ermöglicht nicht nur eine kompakte Anordnung aller Funktionsteile, sondern übernimmt Funktionen, die bisher in zusätzlichen Gehäuseteilen untergebracht werden mussten. So ist das Gehäuse gleichzeitig Motor- und Getriebegehäuse. Durch die Anordnung des Stators durch aufschrumpfen auf dem Gehäusedom wird gleichzeitig die durch die Kupferwicklung des Stators entstehende Wärme über das Gehäuse abgeführt. Mit der kompakten Konstruktion ist nicht nur eine erhebliche Platzeinsparung an sich verbunden. Der optimal genutzte Raum erfasst in einer einzigen radialen Ebene alle erforderlichen wenigen Einzelteile. Es werden keine Anund Abtriebswellen, die aus dem Gehäuse raumgreifend herausragen und zu abgewinkelten Konstruktionen mit den Getriebeteilen und zusätzlichen Übertragungswegen führen, erforderlich. Auch eine erhebliche Material- und Zeiteinsparung bei der Montage ist zu verzeichnen. Über die Verbindungsscheibe, die, um aus dem Gehäuse herausragenden Wellenansatz, der Antriebswelle drehbar angeordnet ist, ist die Ankopplung eines mechanischen Bremssystems und einer mechanischen Drehzahl-Sensorik möglich. Außerdem gestattet diese Verbindungsscheibe bei Bedarf auch die Ankopplung eines schnellen mechanischen Direktabtriebs zur parallelen Nutzung der Drehbewegung des Motors für andere Anwendungsfälle. Schließlich hat diese kompakte Bauweise mit wenigen Einzelteilen hohe Leistungssteigerungen und eine hohe Energieeffizienz des konzentrischen Getriebe- Motors zur Folge.

Der Einsatz des Außenläufermotors hat des Weiteren den Vorteil, dass die Magnete im Inneren des Rotorrings angeordnet sind und bei hohen Umdrehungszahlen durch die Fliehkraft nach außen gedrückt werden. Sie müssen demzufolge nicht, wie häufig bei Innenläufermotoren, zusätzlich gehalten werden. Durch die kompakte Gehäusegestaltung erfolgt außerdem die von außen über das Laufrad einwirkente Kräfteverteilung ausschließlich auf das Gehäuse und die Lager. Die Motor- und Getriebeteile werden so entlastet und gewährleisten eine längere Haltbarkeit derselben.

Vorteilhaft ist schließlich, dass die Konstruktion als zweistufiges Stirnrad-Exzentergetriebe mit zwei Zahnradpaaren zu nutzen ist. Bei der zweistufigen Ausführungsvariante des Getriebes sind im Gegensatz zur einstufigen Variante zwei Zahnradpaare als Antriebs- und Abtriebsrad erforderlich. Bei der zweistufigen Form des konzentrischen Getriebe- Motors können Stützrollen am Planetenrad als Antrieb entfallen. Das Hohlrad der ersten Getriebestufe ist dann am Gehäuse angeordnet und die zweite Getriebestufe wird vom Getriebeabtrieb übernommen.

Besonders hervorzuheben ist auch die Gehäusekonstruktion und deren optimale Verschachtelung, gemäß Anspruch 2, durch die die Last des Laufrades vom Gehäuse und den zwei Lagern aufzunehmen ist, wodurch Motor und Getriebe von dieser Last zu entkoppeln und so zu schonen sind. Das ist vor allem dann von Bedeutung, wenn das Laufrad wahlweise auch als Seilrolle, Zahnrad, Zahnkettenrad oder mit einem anderen Abnehmer ausgestattet wird. Unabhängig von einer höheren Krafteinwirkung von außen auf das Laufrad wird die äußere Krafteinwirkung von der stabilen Verschachtelung des Gehäuses aufgefangen ohne Motor und Getriebe zu belasten.

Bei bestimmten Anwendungsformen, nach Anspruch 3, ist es von Vorteil, wenn die Konstruktion des konzentrischen Getriebe- Motors auch als eistufiges Stirnrad- Exzentergetriebe mit einem Zahnradpaar aufgebaut ist, wobei gemäß Anspruch 4, das Planetenrad mit der evolventen Außenverzahnung an seiner Außenfläche mit, in horizontaler Richtung, angeordneten beabstandeten Stützrollen ausgestattet ist, die über Lager in dem Basisteil zu führen und zu halten sind. Die im Basisteil lagernden Stützrollen verhindern die Eigendrehung des Antriebs im Gehäuse und über die evolvente Außenverzahnung wird die Drehbewegung direkt auf die Innenverzahnung des Hohlrads übertragen und dieses angetrieben.

Von besonderem Vorteil ist es des Weiteren, dass der Verlauf des Planetenrads im Hohlrad exzentrisch ist, was sowohl bei einstufigen als auch bei zweistufigen Stirnrad- Exzentergetrieben zutrifft. Auf diese Weise ist eine erheblich höhere Kraftübertragung zu erreichen, in dem das Eingreifen von bis zu 10 Zähnen in die Innenverzahnung des Hohlrads möglich ist. Bei bekannten Getrieben, bei denen nur 1,5 bis 2 Zähne in das Abtriebsrad eingreifen können, ist die Kraftübertragung wesentlich geringer.

Schließlich ist, gemäß Anspruch 5, eine, in einem separaten Gehäuse angeordnete Leistungselektronik hervorzuheben, die zentrisch mit Sensoren und einer Magnetscheibe ausgestattet ist. Sie kann bei ein- und zweistufigen Getriebeausführungen genutzt werden. Diese Leistungselektronik ist bei Bedarf am Gehäuse der Getriebemotors in horizontaler Richtung an der Außenwand des Basisteils des Getriebe- Motors lösbar und direkt anzuordnen, wobei die zentrisch angeordneten Sensoren und die Magnetscheibe über der Verbindungsscheibe und dem Ende der Antriebswelle des Getriebe- Motors, liegen. Über die Sensoren und die Magnetscheibe erfolgt die Erfassung der Drehzahlen und des Motors, der so steuerbar ist. Außerdem ist eine Brems- und Beschleunigungsfunktion vorgesehen, die im Notfall die Verriegelung des konzentrischen GetriebeMotors und damit dessen sofortigen Stillstand gewährleistet. Die Leistungselektronik ist von außen zu steuern. Sie kann auch separat in der Nähe des Getriebe- Motors angeordnet von dort ferngesteuert werden, oder ganz entfallen.

Die Erfindung soll nachstehend anhand eines Ausführungsbeispiels beschrieben werden, welches in den Zeichnungen in ein- und zweistufiger Form näher dargestellt ist. Dabei zeigen:
Fig.1 die Seitenansicht eines Schnitts A durch den konzentrischen GetriebeMotor mit einstufigem Stirnrad- Exzentergetriebe mit Laufrad,
Fig.2 die Vorderansicht auf einen Schnitt A-A des konzentrischen GetriebeMotors mit einstufigem Stirnrad- Exzentergetriebe und Laufrad,

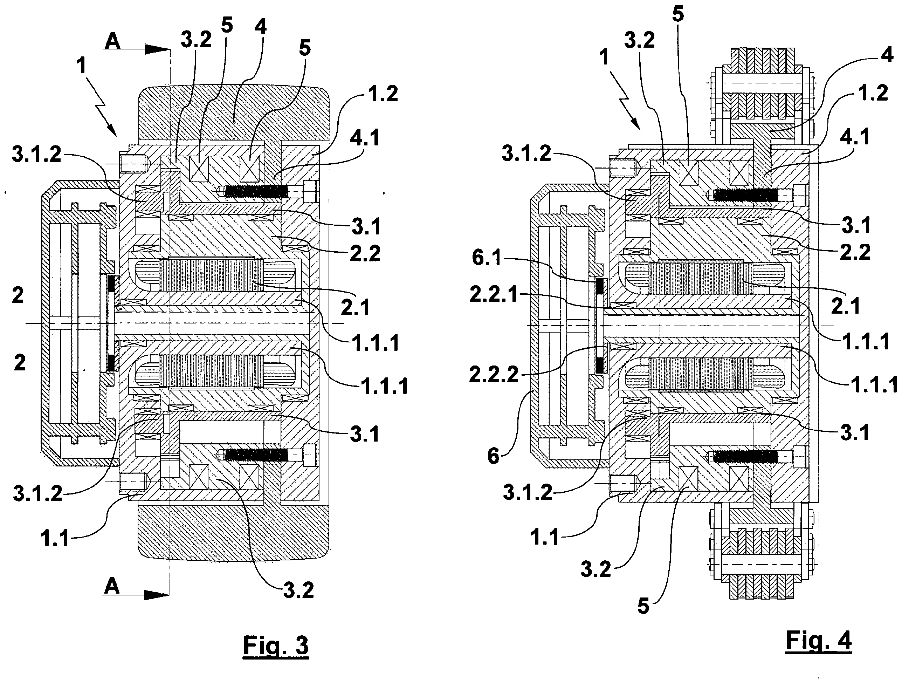

Fig.3 die Seitenansicht eines Schnitts A-A durch den konzentrischen Getriebe- Motor mit einstufigem Stirnrad- Exzentergetriebe mit Laufrad und Leistungselektronik,
Fig.4 die Seitenansicht eines Schnitts A-A durch den konzentrischen Getriebe- Motor mit einstufigem Stirnrad- Exzentergetriebe mit beispielsweise einem am Laufrad angeordneten Zahnkettenrad als Abnehmer und einer Leistungselektronik,
Fig. 5 die Seitenansicht eines Schnitts B durch den konzentrischen GetriebeMotor mit zweistufigem Stirnrad- Exzentergetriebe und Laufrad,
Fig.6 die Vorderansicht auf einen Schnitt B-B durch den konzentrischen Getriebe- Motor mit zweistufigem Stirnrad- Exzentergetriebe mit Laufrad,

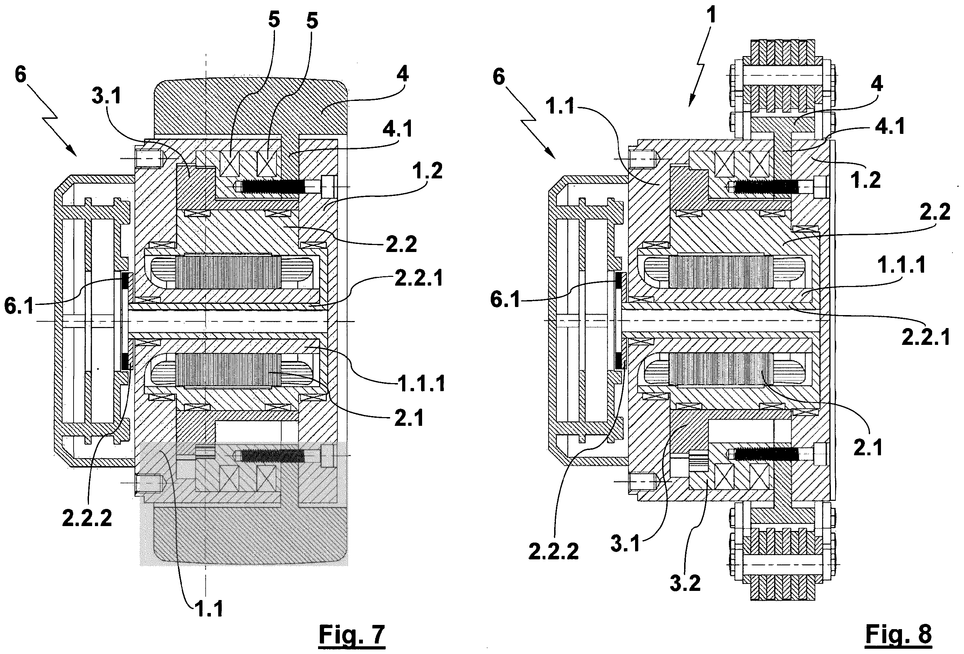

Fig.7 die Seitenansicht eines Schnitts B-B durch den konzentrischen Getriebe- Motor mit zweistufigem Stirnrad- Exzentergetriebe mit Laufrad und Leistungselektronik,
Fig.8 die Seitenansicht eines Schnitts B-B durch den konzentrischen Getriebe- Motor mit zweistufigem Stirnrad- Exzentergetriebe mit einem beispielsweise am Laufrad angeordneten Zahnkettenrad als Abnehmer und einer Leistungselektronik,

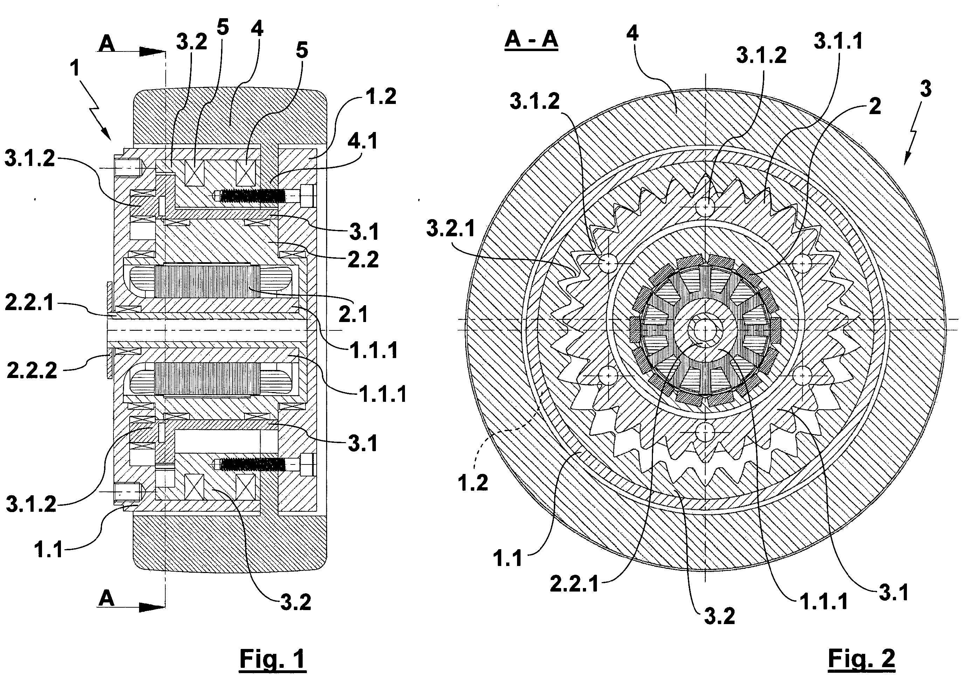

Das Ausführungsbeispiel, gemäß Fig.1, zeigt einen Schnitt in die Seitenansicht und Fig.2 die Vorderansicht auf einen Schnitt A-A des erfindungsgemäßen konzentrischen Getriebe- Motors. Von links gesehen beginnend besteht das Gehäuse 1 zunächst aus dem feststehenden zylindrischen, einseitig offenen Basisteil 1.1 mit einem, außer dem Zentrum, geschlossenen Bodenteil. Im Zentrum ist ein, in das Basisteil 1.1 rechtwinklig hineinragender, horizontal, beidseitig offener Gehäusedom 1.1.1 an dem Basisteil 1.1 einstückig, vorzugsweise angeformt. Das Basisteil 1.1 ist vorzugsweise aus Aluminium oder aus Aluminiumguss gefertigt. Das unterstützt eine optimale Wärmeableitung des Motors. Von der dem Bodenteil gegenüberliegenden offenen Seite des zylindrischen Basisteils 1.1 werden in der Reihenfolge die Teile des konzentrischen Getriebe- Motors auf dem Gehäusedom 1.1.1 in horizontaler Richtung aufgesetzt und somit in radialer Drehrichtung des Getriebe- Motors angeordnet. Zuerst wird der Stator 2.1 des Motors in Form, vorzugsweise aus Kupfer bestehender Wicklungen auf die Innenwand des Gehäusedorns 1.1.1 feststehend vorzugsweise aufgeschrumpft. Es folgt der an seiner äußeren Stirnfläche exzentrisch geformte Rotor 2.2 vorzugsweise aus Stahl mit seinen an der Innenfläche angeordneten Magneten, der mit seiner angeformten Antriebswelle 2.2.1 in den Gehäusedom 1.1.1 eingeführt und mit seinen übrigen Formteilen über den Stator 2.1 gestülpt wird, wodurch die an der Innenseite des Rotors 2.2 angeordneten Magnete über die Spulen des Stators 2.1 geschoben werden und der Rotor 2.2 über Lager 5 am Basisteil 1.1 geführt und gehalten ist und ein kurzes Ende der Antriebswelle 2.2.1, das zentral aus dem Basisteil 1.1 des Gehäuses herausragt und das mit einer Verbindungsscheibe 2.2.2 von außen am Basisteil 1.1 drehbar umschlossen wird. Auf den Rotor 2.2 wird nun von der offenen rechten Seite des zylindrischen Basisteils 1.1 das Planetenrad 3.1 mit seiner radial angeordneten evolventen Außenverzahnung 3.1.1, bei einem einstufigen Stirnrad Excenter- Getriebe, seinen horizontal und beabstandet an seiner Außenfläche angeordneten Stützrollen 3.1.2 über Lager 5 im Basisteil 1.1 und über weitere Lager 5 auf den Rotor 2.2 radial angeordnet. Darauf folgt der Einsatz des Hohlrades 3.2 mit seiner endseitig evolventen Innenverzahnung 3.2.1 das auf dem Planetenrad 3.1 radial aufgesetzt wird, wodurch die Innenverzahnung 3.2.1 des Hohlrads 3.2 in die evolvente Außenverzahnung 3.1.1 des Planetenrades 3.1 gemäß dem jeweiligen exzentrischen Verlauf eingreift. Das Planetenrad 3.1 und das Hohlrad 3.2 sind ebenfalls vorzugsweise aus Stahl gefertigt. Nun kann das Laufrad 4 mit seinem radial nach innen angeformten Flansch 4.1 an die Stirnflächen des Basisteils 1.1 und die Stirnfläche des Hohlrades 3.2 herangeführt und radial auf das Ende des Planetenades 3.1 aufgesetzt werden. Abschließend wird das Basisteil 1.1 an seinem rechtsseitig offenen Zylinder mit dem Verschlussteil 1.2 des Gehäuses 1 verschlossen, was mit einer mechanischen Verbindung, beispielsweise einer Schraubverbindung, von dem Verschlussteil 1.2 ausgehend, durch den Flansch 4.1 des Laufrades 4 mit dem Hohlrad 3.2 als Abtrieb verbunden wird. Das Gehäuse 1 wird so rechtsseitig verschlossen und die Drehbewegung des Hohlrads 3.2 über den Flansch 4.1 auf das Laufrad 4 übertragen, wobei das Verschlussteil 1.2 mit dreht. An der Verbindungsscheibe 2.2.2 kann bedarfsweise die Ankopplung einer mechanischen Drehzahl- Sensorik und eines mechanischen Bremssystems angeordnet werden. Eine Brems- und Beschleunigungsfunktion kann vorgesehen werden, die im Notfall die Verriegelung des konzentrischen Getriebe- Motors 2 und damit dessen sofortigen Stillstand gewährleistet. Die Verbindungsscheibe 2.2.2 kann auch für die Ankopplung eines schnellen mechanischen Direktabtriebs für weitere Nebenanwendungen genutzt werden.

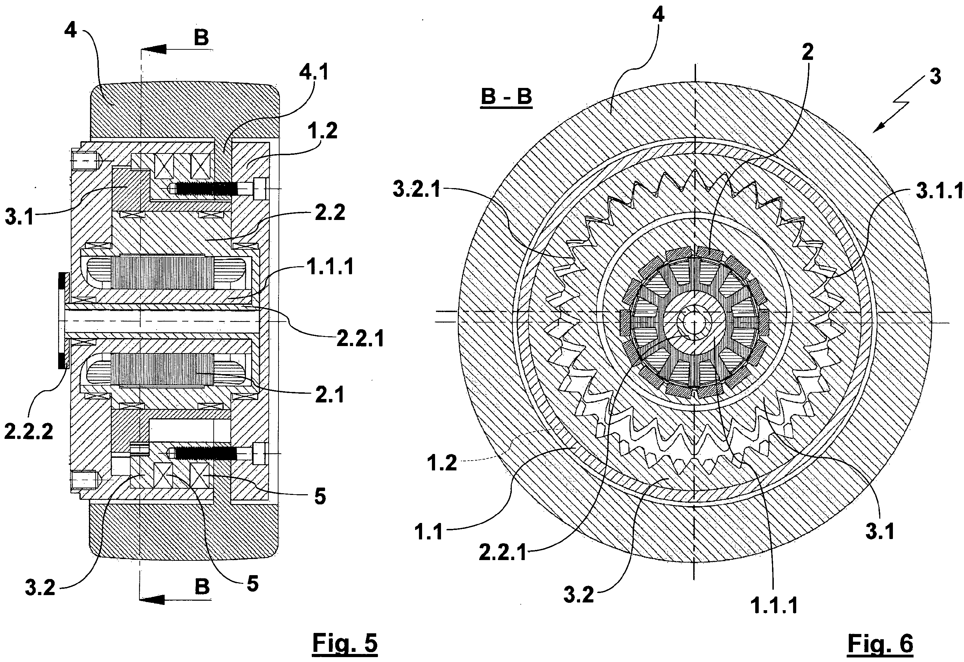

Bei Einsatz einer zweistufigen Getriebevariante, gemäß Fig.5 und Fig.6 erfolgt die Montage in der gleichen Reihenfolge. Es entfallen die Stützrollen 3.1.2 am Planetenrad 3.1, weil sich der Motor einseitig am Basisteil 1.1 abstützt.

Die beschriěbene, im einstufige Getriebevariante, gemäß Fig.1 gewährleistet eine Übersetzung von i < = 100. Bei Einsatz einer zweistufigen Getriebevariante, gemäß Fig.5, die besonders bei hochtourigen und hochleistungsfähigen konzentrischen Getriebe- Motoren genutzt wird, beträgt die Übersetzung i > 10 bis < 10.000.

Schließlich kann bei Bedarf, gemäß Fig.1, einer einstufigen Variante und Fig.5 einer zweistufigen Variante, eine Leistungselektronik 6 in einem separaten Gehäuse an oder in Nähe des Gehäuses 1 angeordnet werden.

Im Ausführungsbeispiel wurde die Leistungselektronik 6 vorzugsweise mit der linken äußeren Seitenfläche des Gehäuses 1 mit ihrem separaten Gehäuse vorzugsweise verschraubt, derart, dass die Sensoren und die Magnetscheibe 6.1 der Leistungselektronik 6 zentrisch in horizontaler Richtung und gegenüber der Verbindungsscheibe 2.2.2 und der aus dieser herausragenden Antriebswelle 2.2.1 des Motors 2 lagern. Die Magnetscheibe 6.1 läuft über die Sensoren hinweg und zählt dabei die Drehimpulse des Motors 2.

Diese Leistungselektronik 6 kann bei Bedarf und platzsparend direkt am Gehäuse 1 des Getriebe- Motors 2 befestigt werden. Sie kann durch ihr separates Gehäuse aber auch ferngesteuert an anderer Stelle angeordnet werden.

### Aufstellung der verwendeten Bezugszeichen

- 1.: Gehäuse,
- 1.1: Basisteil,
- 1.1.1: Gehäusedom,
- 1.2: Verschlussteil,
- 2.: konzentrischer Getriebe- Motor,
- 2.1: Stator,
- 2.2: Rotor mit innenliegenden Magneten,
- 2.2.1: Antriebswelle,
- 2.2.2: Verbindungsscheibe,
- 3.: Stirnrad- Exzentergetriebe,
- 3.1: Planetenrad/ Antrieb,
- 3.1.1: evolvente Außenverzahnung,
- 3.1.2: Stützrollen,
- 3.2.: Hohlrad,
- 3.2.1: evolvente Innenverzahnung/ Abtrieb,
- 4.: Laufrad,
- 4.1: Flansch
- 5.: Lager,
- 6.: Leistungselektronik,
- 6.1: Magnetscheibe

## Patentansprüche

1. Konzentrischer Getriebe- Motor, aufweisend ein Gehäuse (1), in dem ein konzentrischer Getriebe- Motor (2) als Außenläufer mit einem Stirnrad-Exzentergetriebe (3) angeordnet ist und mit einer Leistungselektronik zu kombinieren ist, **dadurch gekennzeichnet, dass** das Gehäuse (1) aus einem feststehenden einseitig offenen zylindrischen Basisteil (1.1) besteht, in dem ein, in den Innenraum des Gehäuses (1) ragender hohler beidseitig offener Gehäusedom (1.1.1) zentrisch und horizontal zur Drehrichtung des konzentrischen Getriebe- Motors (2) einstückig angeordnet ist und aus einem separaten Verschlussteil (1.2), welches das Gehäuse (1) auf der offenen Seite flächig aber drehbar verschließt, zusammengesetzt ist,
**dass** der konzentrische Getriebe- Motor (2) mit seinem Stator (2.1) radial auf der Innenwand des beidseitig offenen Gehäusedoms (1.1.1) des Basisteils (1.1) fest aufgeschrumpft ist und der innen magnetbestückte, an seiner stirnseitigen Außenfläche exzentrisch geformte Rotor (2.2) als Außenläufer einerseits radial um den Stator (2.1), andererseits radial entlang der Außenwand des hohlen Gehäusedoms (1.1.1) als einseitig offene zylindrische hohle Antriebswelle (2.2.1) verläuft und um einen, außerhalb des Basisteils (1.1) endseitig herausragenden Wellenansatz der Antriebswelle (2.2.1) eine Verbindungsscheibe (2.2.2) stabil und drehbar am Basisteil (1.1) des Gehäuses (1) angeordnet ist,
**dass** das Stirnrad- Exzentergetriebe (3) zweistufig mit zwei Zahnradpaaren gebildet ist, die jeweils aus einem Planetenrad (3.1) mit einer evolventen Außenverzahnung (3.1.1) als Antrieb, der radial über dem Rotor (2.2) angeordnet ist und einem zum Planetenrad (3.1) angeordnetes Hohlrad (3.2) mit einer evolventen Innenverzahnung (3.2.1) als Abtrieb bestehen, die radial über dem Planetenrad (3.1) angeordnet sind und sich die linke Motorlagerung am Basisteil (1.1) abstützt,
**dass** auf der äußeren Mantelfläche des Basisteils (1.1) ein Laufrad (4) angeordnet ist, das mit einem radial nach innen gerichtet angeformten Flansch (4.1) zwischen Basisteil (1.1) und Verschlussteil (1.2) in das Gehäuse (1) eingreift und mit dem die Drehbewegung des Motors auf das Laufrad (4) zu übertragen ist und
**dass** mit dem Verschlussteil (1.2) über das Hohlrad (3.2) das Basisteil (1.1) mit dem darin radial angeordneten und über Lager (5) am Basisteil (1.1) und zwischen den Einbauteilen stabil gelagerten Außenläufermotorteilen und Exzenter- Getriebeteilen, drehbar mechanisch miteinander zu verbinden und das Basisteil (1.1) einseitig zu verschließen ist.

2. Konzentrischer Getriebe- Motor, nach Anspruch 1, **dadurch gekennzeichnet, dass** die Last des Laufrades (4) vom Gehäuse (1) und den zwei Lagern (5) aufzunehmen ist, und das Laufrad (4) wahlweise mit Radnabe, Seilrolle, Zahnrad, Zahnkettenrad oder mit einem anderen Abnehmer auszustatten ist.

3. Konzentrischer Getriebe- Motor, nach Anspruch 1, **dadurch gekennzeichnet, dass** die Konstruktion des konzentrischen Getriebe- Motors (2) auch mit einem einstufigen Stirnrad- Exzentergetriebe (3) mit nur einem Zahnradpaar auszustatten ist.

4. Konzentrischer Getriebe- Motor, nach Anspruch 3, **dadurch gekennzeichnet, dass** das Planetenrad (3.1) mit der evolventen Außenverzahnung (3.1.1) an seiner Außenfläche mit in horizontaler Richtung angeordneten beabstandeten Stützrollen (3.1.2) ausgestattet ist, die über die Lager (5) in dem Basisteil (1.1) zu führen und zu halten sind.

5. Konzentrischer Getriebe- Motor, nach einem der vorhergehenden Ansprüche, **dadurch gekennzeichnet, dass** eine, in einem separaten Gehäuse angeordnete Leistungselektronik (6) in kompakter Form direkt am Gehäuse (1) oder an anderer Stelle lösbar anzuordnen ist, die zentrisch mit Sensoren und einer Magnetscheibe (6.1) ausgestattet ist.
